# EUROPEAN PATENT SPECIFICATION

(11) **EP 4 628 218 B1**
(45) Date of publication and mention of the grant of the patent: **28.10.2026**
(21) Application number: 24168009.9
(22) Date of filing: 02.04.2024
(51) Int. Cl.: B04C 5/16, F16K 7/04, F16K 7/06

(54) **A SAND-MANURE LIQUID SEPARATION PLANT COMPRISING A PRE-SEPARATOR INCLUDING A CYCLONE, A CYCLONE AND USE OF THE CYCLONE IN A SAND-MANURE LIQUID SEPARATION PLANT AND A METHOD OF OPERATING THE PLANT**
SAND-JAUCHE TRENNUNGSANLAGE MIT VORABSCHEIDER MIT ZYKLON, ZYKLON UND VERWENDUNG DES ZYKLONS IN EINER SAND-JAUCHE TRENNUNGSANLAGE UND VERFAHREN ZUM BETRIEB DER ANLAGE
INSTALLATION DE SÉPARATION DE SABLE-PURIN COMPRENANT UN PRÉ-SÉPARATEUR COMPRENANT UN CYCLONE, UN CYCLONE ET UTILISATION DU CYCLONE DANS UNE INSTALLATION DE SÉPARATION DE SABLE-PURIN ET PROCÉDÉ DE FONCTIONNEMENT DE L'INSTALLATION

(43) Date of publication of application: 08.10.2025
(73) Proprietor: Stjernholm A/S, 8940 Randers SV (DK)
(72) Inventor: STJERNHOLM, Kaj Nees Sørensen, 8940 Randers SV (DK); CHRISTIANSEN, Thomas Fleischer, 8940 Randers SV (DK); SIMONSEN, Bent Ejnar Juul, 8940 Randers SV (DK)
(74) Representative: Zacco Denmark A/S

(56) References cited:
- EP-B1- 2 587 980
- WO-A1-00/27539
- DK-U3- 199 900 152
- GB-A- 689 229
- STACEY SMART: "Recycling the highest quality of sand", DAIRY STAR, 30 October 2023 (2023-10-30), pages 1 - 4, XP093168142, Retrieved from the Internet <URL:https://dairystar.com/stories/recycling-the-highest-quality-of-sand,21386> [retrieved on 20240620]

## Description

### Field of the invention

The invention concern a sand-manure liquid separation plant comprising a tank for processing a mixture of sand and manure liquid; said tank comprising, a top portion including a mixture inlet for introducing said mixture to be processed into said tank, a bottom portion including a sand discharge, wherein said plant further comprises a pre-separator for a raw stream of sand mixed with manure liquid, said pre-separator including a cyclone, a tubular outlet portion of said cyclone at a bottom part of the cyclone being arranged at said top portion of said tank for said mixture leaving said cyclone to be processed in said tank to flow into said tank by gravity via said mixture inlet, said outlet portion of said cyclone including a flow restriction portion being of a resilient material and having a through-going passage for said mixture, said plant including a control unit to control an output flow from said cyclone of said mixture to be introduced into said tank via said through-going passage, a first clamping body engaging an outer periphery of said flow restriction portion, said first clamping body being adjustable to vary the cross-section of said through-going passage of said flow restriction portion, said first clamping body optionally being removable from said outlet portion and replaceable. The invention also concerns a cyclone comprising a tubular outlet portion, where said outlet portion including a flow restriction portion being of a resilient material having a through-going passage, a first clamping body engaging an outer periphery of said flow restriction portion, said first clamping body being adjustable to vary the cross section of said through-going passage of said flow restriction portion, said first clamping body optionally being removable from said outlet portion and replaceable and use of the cyclone in a sand-manure liquid separation plant and a method of operating the plant.

### Background of the invention

When handling manure in stables or barns, where sand is used as bedding material, the presence of sand in the manure running through a manure handling plant may cause severe wear on parts of the plant in contact with the sand. Sand beddings are often preferred to organic material bedding materials due to the lower rate of bacterial growth.

A sand-manure liquid separation plant generally may operate to clean and concentrate the sand so that it can be reused in the stables or barns. Reusing as much of the sand as possible as a bedding material saves money for the farmer, and the benefits are enhanced where the separated sand fulfils certain quality requirements. In certain cases the farmer may wish to use very fine sand for the bedding in order to increase animal welfare since such a bedding is more comfortable to lie on for the animal and reduces the formation of wounds.

Therefore, an object of the invention is to provide for an optimization of a sand-manure liquid separation plant.

WO00/27539 discloses a cyclone comprising a tubular outlet portion including a flow restriction portion having a through-going passage, a clamping body engaging an outer periphery of the flow restriction portion and being adjustable to vary the cross-section of the through-going passage. Further relevant prior art is disclosed in GB 689 229 A, EP 2 587 980 B1 and DK 1999 00152 U3.

### Description of the invention

Disclosed herein in a first aspect is a sand-manure liquid separation plant as defined in claim 1.

Also disclosed herein in a second aspect is a cyclone as defined in claim 5.

In one or more embodiments of the first or second aspect, the actuator may be a rotating actuator or a linear actuator. In one or more embodiments of the first or second aspect, the actuator is a spindle. The spindle may be a rotating spindle. The raw stream of sand mixed with manure liquid is also called the raw manure. Both the raw stream of sand mixed with manure liquid and the mixture of sand and manure liquid contains organic matters. The tank comprising the raw stream of sand mixed with manure liquid is also called the raw manure tank. Manure liquid is a mixture of animal waste and organic matter. It comprises animal faeces and urine and may contain wasted feed.

By being able to adjust the cross-section of the through-going passage of the flow restriction portion and thereby control the output flow from the cyclone of the mixture to be introduced into the tank via said through-going passage an optimization of the sand-manure liquid separation plant is assured.

The raw stream of sand mixed with manure liquid is pumped from a tank (raw manure tank) via a connecting pipe into the pre-separator. In one or more examples, the connecting pipe comprising a dry matter meter and a flow meter. The raw stream of sand mixed with manure liquid may be mixed with water (from a flush water tank) to reach a required/desired dry matter percentage.

A pre-separation of the raw stream of sand mixed with manure liquid is done in the cyclone. The sand material gravitates through the cyclone and into the tank via the mixture inlet. In the cyclone, the sand material is pre-separated from the manure liquid by the function of the cyclone and the difference in density between sand and liquid. The cyclone can control and sort the particles based on the particle mass. In one or more examples, the particle mass can be controlled down to 1 to 2 grams. The part of the liquid that is free of sand is forced out through the top of the cyclone, while the rest with the heavier sand flows out through the outlet portion of the cyclone at a bottom part of the cyclone.

The tank for processing the mixture of sand and manure liquid treats and washes the material, and the washed sand is transported from the bottom of the tank by means of one or more screw conveyor and is stored in a sand pile until use. Each sand-manure liquid separation plant can comprise between 1 to 4 screw conveyers, and each screw conveyer can process up to 1500 kg sand per hour e.g. in the interval between 800 to 1000 kg. In one or more examples, the washed sand contains less than 3% by weight of organic matters.

The majority of the manure liquid part of the raw stream of sand mixed with manure liquid and the majority of the organic matters of the raw stream of sand mixed with manure liquid will be rejected upwards by the cyclone and can be transported to a unit (drum screen) for mechanical separation of the material into thin material (having small particles sizes) and thick material (having large particles sizes). The thick material is the sand-free manure liquid, which might be transported to a storing tank and used for biogas and the thin material may be transported into the flush water tank and can then be reused for diluting the raw manure to reach a required dry matter percentage.

In the tank for processing the mixture of sand and manure liquid, the mixture still comprise some manure liquid and organic matters. During the treating and washing of the mixture in the tank, the manure liquid and organic matters moves across the overflow edge of the tank and is transported back to the raw manure tank from where the raw stream of sand mixed with manure liquid was pumped from in the first place (the raw manure tank).

In one or more embodiments of the first or second aspect, the adjustment command is defined based on desired degree of separation of the raw stream of sand mixed with manure liquid. By the desired degree of separation is also meant desired retention rate. Degree of separation is a measure for how much of the sand present in the raw stream of sand mixed with manure liquid that can be separated from the manure liquid.

It is an advantage of the present invention that most of the sand from the raw stream of sand mixed with manure liquid is able to be reused. In one or more embodiments of the first or second aspect, the desired degree of separation is 95 % by weight or more or such as 97 % by weight or more. Hence, by the present invention it is assured that at least 95%, or at least 97% by weight or more of the sand is able to be reused for bedding material for the animals in the stables or barns. For the farmer, it is an economic benefit to be able to reuse as much sand as possible.

In one example, the washed sand does not contain more than a maximum of 3% by weight of organic matter. By keeping the amount of organic matter low in the washed sand, the sand will by more dry since water binds to the organic matter present and hence, the risk of bacterial growth in the sand will also be minimized.

Hence, a good quality of the washed sand is of major importance for the farmer, since having good bedding material for the animals in the stables or barns is increasing the life-quality for the animals.

The sand-free manure liquid, which might be transported to a storing tank and used for biogas, may have a dry matter in the range from 6 to 8 % by weight.

The sand-free manure liquid which might be transported to a storing tank and used for biogas, may have above 75 % or above 78 % or above 80 % by weight of organic matter.

In one example, the mixture comprising sand where 90% by weight or more, such as 95% by weight or more has a grain size of between 90 microns to 350 microns, such as 100 micron to 300 microns.

The washed sand - the sand particles - will in one or more examples have a size (grain size) in the range of 90 to 350 microns or such as in the range of 100 to 300 microns. The washed sand - the sand particles - will in one or more examples have a size above 125 micron. It is known that a smaller grain size of the sand improves the animal welfare in that smaller size sand grains are more comfortable to lie on for the animal.

In one or more embodiment of the first or second aspect, the adjustment command can be a process value measured in the system. Various parameters (process values) can therefore influence the degree of separation.

In one or more embodiments of the first or second aspect, the adjustment command is based on a measured value of the dry matter in said raw stream of sand mixed with manure liquid. Hence, the process value could in one example be the dry matter as measured by a dry matter meter.

The dry matter meter may be placed in connection with the pipe connection positioned between the raw manure tank and the cyclone. Hence, the dry matter meter may be placed before the inlet to the pre-separator. In one example, the weight value (in weight%) of the dry matter might be in the range from 3.0 to 5.0, such as in the range of 3.4 to 4.4, or such as in the range of 3.6 to 4.0. The dry matter of the raw stream of sand mixed with manure liquid may be controlled and adjusted by diluting the raw stream of sand mixed with manure liquid with the material from the flush water tank. In one or more examples, the dry matter of the raw stream of sand mixed with manure liquid is adjusted to be in the range of 3.6 to 4.0 % by weight, or approximately 3.8 % by weight. The raw manure in the raw manure tank comprising a mix of livestock excreta and urine and other organic matter and sand collected from one or more stables and led to the raw manure tank may have a dry matter in the range from 7 to 18 % by weight.

The cross-section of said through-going passage of said flow restriction portion, may then be adjusted accordingly to the weight value (in weight%) of the dry matter. If the dry matter as measured is in the high range, then the cross-section of said through-going passage will be adjusted to be in the higher range. If the dry matter as measured is in the low range, then the cross-section of said through-going passage will be adjusted to be in the low range. In one example, if a dry matter of 4.0 is measured, the cross-section of said through-going passage may be adjusted to be in the higher range e.g. 46 mm, whereas if a dry matter of 3.6 is measured, the cross-section of said through-going passage may be adjusted to be in the lower range e.g. 32 mm. The value of the dry matter measured also gives information about the viscosity of the raw stream of sand mixed with manure liquid.

In one or more embodiments of the first or second aspect, the adjustment command is based on flow as measured by a flow meter for registering a second flow of material from the cyclone. The second flow may in one or more embodiments be the flow of material rejected upwards by the cyclone.

Hence, in one or more embodiments, the sand-manure liquid separation plant comprises a flow meter for registering the flow of the material rejected upwards by the cyclone. The flow meter may be placed in connection with the pipeline leading the material rejected upwards by the cyclone to the rotary screen filter. The material being the majority of the manure liquid part of the raw stream of sand mixed with manure liquid and the majority of the organic matters of the raw stream of sand mixed with manure liquid. Hence, in one or more embodiments, the process value could be the flow as measured by the flow meter for registering the flow of the material rejected upwards by the cyclone.

In one or more examples, between 45 to 60 % of the incoming flow will be rejected upwards by the cyclone. In one or more examples, the second flow of material from the cyclone may vary a bit. In one or more examples, the variation is within the range of 0.1 to 0.4 m³/hour. This may, at least partly, be due to the material properties of the flow restriction portion of said outlet portion and/or the internal shape or design of the flow restriction portion of said outlet portion.

In one or more embodiments of the first or second aspect, the adjustment command is based on flow as measured by a flow meter for registering a flow of the raw stream of sand mixed with manure liquid into the cyclone. In one or more embodiments, the sand-manure liquid separation plant comprises a flow meter for registering the flow of the raw stream of sand mixed with manure liquid into the cyclone. Hence, the process value could in one example be the flow of the raw stream of sand mixed with manure liquid into the cyclone as measured by a flow meter. The flow meter may be placed in connection with the pipe connection positioned between the raw manure tank and the cyclone. Hence, the flow meter may be placed before the inlet to the pre-separator. In one or more examples, the flow of the raw stream of sand mixed with manure liquid into the cyclone as measured by a flow meter may be in the range of 22 to 30 m³/hour. In one or more examples, the flow of the material rejected upwards by the cyclone may be in the range of 10 to 18 m³/hour.

In one or more embodiments of the first or second aspect, the adjustment command is based on pressure as measured by an apparatus for measuring pressure (a pressure transmitter) for registering a pressure of the raw stream of sand mixed with manure liquid inflow to the cyclone. In one or more examples, the pressure of the raw stream of sand mixed with manure liquid inflow to the cyclone is in the range of 0.7 to 1 bar, such as in the range of 0.8 to 0.9 bar.

In one or more embodiments, the sand-manure liquid separation plant comprises an apparatus for measuring the pressure (a pressure transmitter) of the raw stream of sand mixed with manure liquid inflow to the cyclone. Hence, in one or more embodiments, the process value could be the pressure as measured by the apparatus for measuring the pressure.

In one or more embodiments of the first or second aspect, the flow restriction portion is attached to the cyclone. In one or more embodiments of the first or second aspect, the flow restriction portion is being integrated into the cyclone.

In one or more embodiments of the first or second aspect, the flow restriction portion being of a resilient material is manufactured in a durable elastic material. The material needs to be durable against the wear and tear from sand but at the same time flexible enough to be able to being pressed together to adjust the cross-section of said through-going passage. In one or more embodiments of the first or second aspect, the flow restriction portion is manufactured in an abrasion resistant polymeric material. In one or more embodiments of the first or second aspect, the flow restriction portion of the outlet portion is manufactured in a polyurethane material having a shore hardness value (shore A) in the range of 30 to 90, such as in the range of 50 to 80, such as in the range of 50 to 70, such as around 60.

The hardness of plastic materials, typically polymers, elastomers and rubbers, can be measured on a shore hardness scale, which measures the resistance of a material to indentation. The hardness may be tested using a durometer device. In the present disclosure, the shore A scale is used for measuring the hardness. A higher number indicates greater resistance to indentation so therefore a harder material. Softer materials are lower on the scale.

In one or more embodiments of the first or second aspect, the cyclone is manufactured in a polyurethane material having a shore hardness value (shore A) in the range of 80 to 100. In one or more embodiments of the first or second aspect, the cyclone is having a shore hardness value of 90. By having the cyclone made in polyurethane material having a shore hardness value of 90 it is assured that the material can resist the wear that will results from the sand material-manure liquid mixture being processed and separated in the cyclone.

In one or more embodiments of the first or second aspect, a second clamping body having an adjustable cross-section and engaging an outer periphery of said first clamping body is present.

In one or more embodiments of the first or second aspect, said first clamping body and/or said second clamping body being configured to provide a uniform, or substantially uniform, radial pressure against said outer periphery of said flow restriction portion.

In one or more embodiments of the first or second aspect, said first clamping body and/or said second clamping body being a substantially ring-shaped clamping body or a segmented clamping body. In one or more embodiments of the first or second aspect, it could be a clamping body defined by a plurality of radially inwardly moving segment driven inwardly by the actuator which serves to rotate an outer disc engaging engaging-portions defined by faces on the segments. In another embodiment, the clamping body could be a structure operating in the manner of an iris valve (which does not close fully), such as by including a series of leaves or vanes which rotate in from the outer edge of a circular opening towards a center or in the form of an iris diaphragm, or a similar mechanism that can vary the diameter of the through-going passage of the flow restriction portion. Thereby it can be obtained that the through-going passage during the size regulation maintain a circular geometry.

In one or more embodiments of the first or second aspect, said first clamping body and/or said second clamping body may be made in a hard durable material such as stainless steel.

In one or more embodiments of the first or second aspect, said first clamping body being manufactured of a polymeric material and preferably comprising a plurality of first segments interconnected by a plurality of thin walled second segments. When the first clamping body is providing a pressure against the outer periphery of the flow restriction portion the thin walled segments is able to bulge.

In one or more embodiments of the first or second aspect, said first clamping body is manufactured in a polyurethane material having a shore hardness value (shore A) in the range of 70 to 100, such as in the range of 60 to 90, such as in the range of 70 to 90. In one or more embodiments, the first clamping body is having a shore hardness value of 80. By having the first clamping body made in polyurethane material having a shore hardness value of 80 it is assured that the material can resist the wear that will results from repetitive movements.

In one or more embodiments, the tank further comprises a stirrer. The stirrer may be a rotary stirrer. In one or more embodiments, the stirrer is rotating about a central axis of the tank. A stirrer preferably serves to stir settled sand such that any impurities remaining on the surface of the grains of sand will raise to the surface of the manure liquid, normally driven by an upward flow of water supplied at the bottom of the tank.

In one or more embodiments of the plant, said sand discharge communicates with at least one upwardly extending screw conveyor.

In one or more embodiments of the plant, said bottom portion further comprises a number of water inlets for supplying fresh water under pressure to said tank. The water inlets are configured for providing an upward flow of said supplied fresh water in said tank.

In one or more embodiments of the plant, said tank having a liquid outlet arranged at a level of said tank defining a maximum level of filling of said mixture in said tank, and wherein said mixture inlet for introducing said mixture into said tank is arranged at a level above said liquid outlet. In one or more embodiments, the maximum level (ML) of filling is being defined by a level of overflow of the mixture in the tank. Hence, in one or more embodiments, the liquid outlet comprises the overflow.

In one or more embodiments of the plant, said plant including a source of a fluid and a number of fluid outlets arranged above the maximum level and connected to the source of a fluid, said outlets being configured to provide a flow of said fluid directed towards said maximum level.

In one or more embodiments of the plant, said fluid being fresh water. In one or more embodiments of the plant, said fluid comprises a surfactant.

In a third aspect is disclosed the use of the cyclone according to the present disclosure in a sand-manure liquid separation plant, said plant comprising a tank for processing a mixture of sand and manure liquid; said tank comprising:
- a top portion including a mixture inlet for introducing said mixture into said tank,
- a bottom portion including a sand discharge,
wherein said plant further comprises a pre-separator for a raw stream of sand mixed with manure liquid, said cyclone defining said pre-separator, a tubular outlet portion of said cyclone at a bottom part of the cyclone being arranged at said top portion of said tank for said mixture leaving said cyclone to be processed in said tank to flow into said tank by gravity via said mixture inlet.

In one or more embodiments of the use, the sand-manure liquid separation plant is as disclosed herein.

In one or more embodiments of the use, 90% by weight or more, such as 95% by weight or more of the sand in the mixture has a grain size of between 100 micron to 300 microns.

In a fourth aspect is also disclosed a method of operating the plant according to the present disclosure, the method comprising the steps of:
- measuring:
   ∘ a value of the dry matter of the raw stream of sand mixed with manure liquid, and/or
   ∘ flow as measured by a flow meter for registering a second flow of material from the cyclone, and/or
   ∘ flow as measured by a flow meter of the raw stream of sand mixed with manure liquid into the cyclone;
- sending an adjustment command from the control unit to the actuator based on said measurements;
- said actuator adjusting the first clamping body to vary the cross-section of said through-going passage of said flow restriction portion thereby adjusting said output flow of said mixture into said tank.

### Brief description of figures

Fig. 1a shows a general overview of a sand-manure liquid separation plant, with a general description of some key elements,
Fig. 1b shows, seen from the side, a tank element and a sand discharge element of the sand-manure liquid separation plant,
Fig. 1c is a top view of the tank element and sand discharge element shown in fig. 1b,
Fig. 1d shows a cross-section, at line E-E, of the tank element and sand discharge element of fig. 1c,
Fig. 2 shows a cyclone of the plant,
Fig. 3 shows a flow restriction portion of the cyclone, with a two-part clamping body,
Figs. 4A-B shows the flow restriction portion, where fig. 4A shows the flow restriction portion in a non-compressed state, and where fig. 4B shows the flow restriction portion in a compressed state, in a cross-sectional view and seen from an end,
Figs. 5 a-d show the flow restriction portion engaged by two surrounding clamping bodies, and
Figs. 6 a-c show the portion of the tank marked with a broken line circle in fig. 1d, seen from above and in two cross-sectional side views representing a respective embodiment.

### Detailed description of the invention

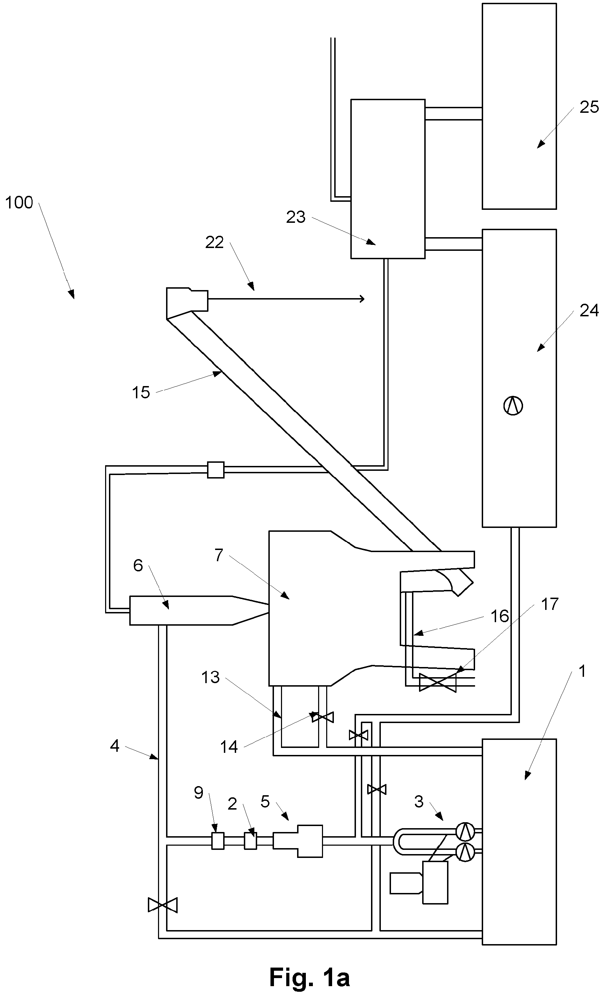

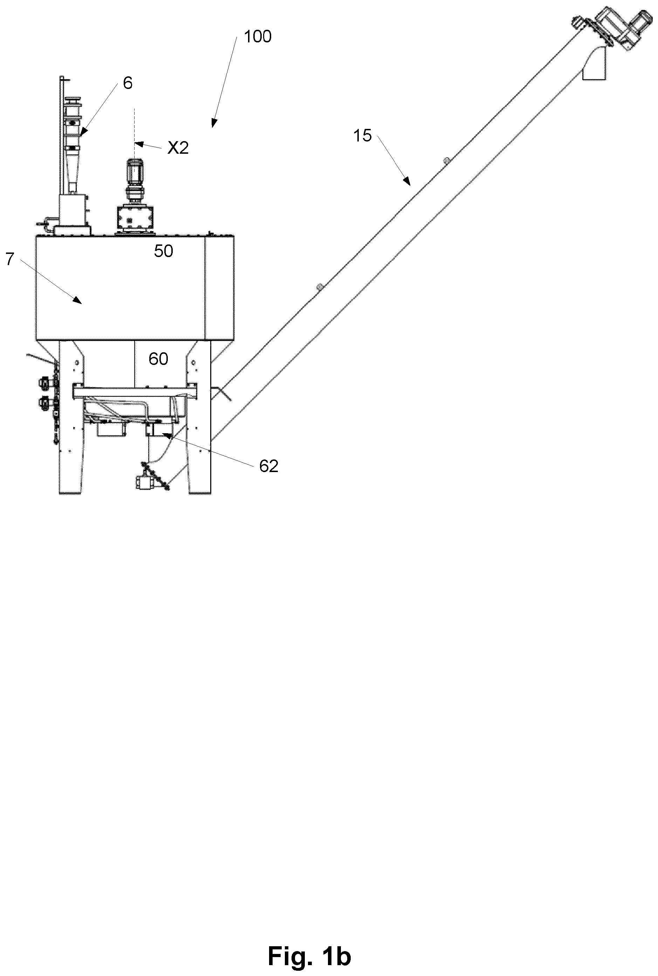

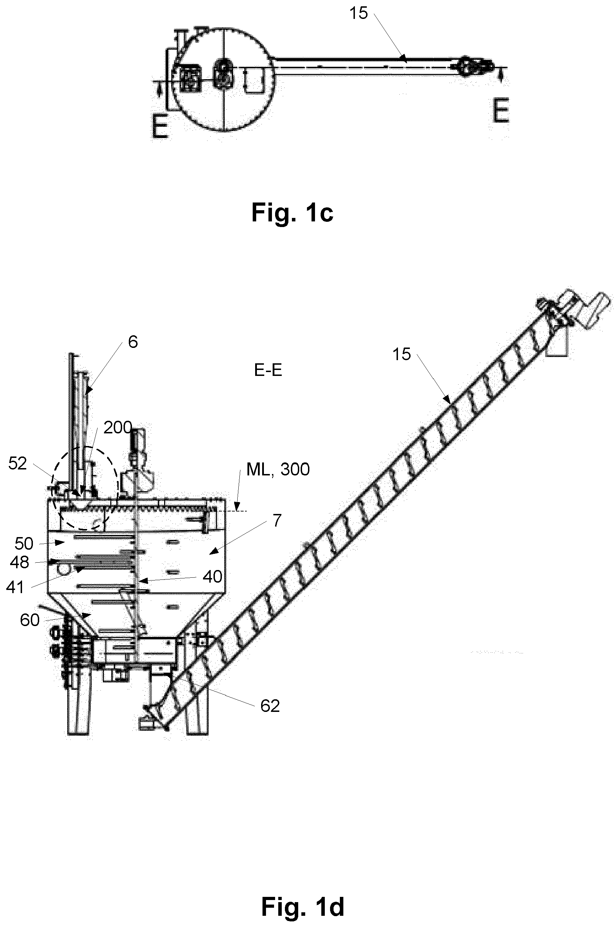

In the plant 100 shown in fig. 1a, a raw stream of sand mixed with manure liquid or a slurry comprising a mix of livestock excreta and urine is collected from one or more stables and led to a tank 1 for "raw manure". This tank 1 is provided with a powerful agitator to ensure a thorough mixing of slurry and sand before it is pumped further in the plant by a raw slurry pump 3. The raw stream of sand mixed with manure liquid may be mixed with water (from a flush water tank 24 to reach a required dry matter percentage).

The raw slurry pump 3 can by advantage be one or more positive displacement pumps, such as piston pumps. In an advantageous embodiment of such positive displacement pumps 3, the pump 3 comprises two cylinders and two pistons, where the time when each of the pistons is at its peak (top dead centre or TDC) is displaced and that the return stroke of the pistons is controlled so that when the first piston delivers its maximum pressure, the second piston has already started to build up pressure, but at a lower level. When the first piston passes its top dead centre, it quickly returns to its bottom dead centre in order to start building pressure already when the second piston delivers its maximum pressure. This results in a pump 3 where there are no major fluctuations in pump pressure during a pump cycle.

In a pipeline leading the raw stream of sand mixed with manure liquid further in the plant is provided a macerator 5 which ensures the comminution of coarse dry matter parts and separates foreign objects such as stones, cow teeth, hooves or parts of hooves, ear tags, patches, bandages or large pieces of wood. Hereby it is ensured that such larger particles as mentioned before, are disintegrated so that they do not clog the plant and cause unnecessary downtime. The pipeline 4, also referred to as a connecting pipe, may comprise a dry matter meter 2 and a flow meter 9.

The pipeline 4 leads the raw stream of sand mixed with manure liquid into a cyclone 6 for pre-separation and then the mixture gravitates into the tank for processing the mixture 7. The raw stream of sand mixed with manure liquid containing organic material is pumped into the cyclone 6 via a tangential inlet and through the cyclone 6 into a top portion of the tank.

In the cyclone 6, the sand material is pre-separated from the manure liquid or slurry by the function of the cyclone 6 and the difference in density between sand and liquid. The cyclone can control and sort the particles based on the particle mass. In one or more embodiments, the particle mass can be controlled down to 1 to 2 grams. The part of the liquid that is free of sand is forced out through the top of the cyclone 6, while the rest with the heavier sand flows out through the outlet portion of the cyclone at a bottom part of the cyclone.

A slow-moving rotary stirrer is mounted inside the tank 7, which separates sand and organic matter. The rotary stirrer is shown in fig. 1d. The rotary stirrer comprises a plurality of curved arms extending from at substantially vertical rotational axis and can have different embodiments showing different number of arms, having different lengths, having different diameters and having different curvatures.

The sand settles at the bottom of the tank 7. The sand-free manure liquid (residual slurry) with the organic material remains at the top of the tank 7 and flows out through the outlet 13 of the tank, via an overflow, and is transported back to the raw manure tank. A pipeline 14 comprising a valve may be used for removing residuals and/or sludge that would otherwise clog the tank. The valve can be opened when needed, often 2 to 3 times a day depending on the need.

The level of sand at the bottom of the tank 7 will increase during operation. This will increase the resistance of the rotary stirrer. When the load on a gear motor driving the stirrer reaches a certain upper level, one or more screw conveyors 15 will operate in an on/off setting. The moment less sand is supplied than is transported away via the screw conveyors 15, the load on the stirrer gear motor will decrease and when a predetermined lower level is reached, the screw conveyors 15 will stop. Each sand-manure liquid separation plant can comprise between 1 to 4 screw conveyers, and each screw conveyer can process up to 1500 kg sand per hour, e.g. in the interval between 800 to 1000 kg.

At the bottom of the tank 7 there is a rinsing water arrangement 16 which makes it possible to rinse the sand continuously with water, so that organic material is washed out and the sand cleaned. Upon an external start signal, the tank's 7 water valve 17 opens. The water valve 17 is open until the flow is above the minimum flow sensor setpoint. If the pressure of the water changes so that the pressure drops and the flow falls below the minimum, the valve 17 opens further to maintain the desired flow. If the pressure increases so that the flow reaches the sensor for maximum flow, the valve 17 will close so that the flow falls below the maximum.

Sand being discharged 22 from the one or more screw conveyors 15 ends in a container or a pile and when the sand is sufficiently dry, it can be used for bedding material again. In one or more embodiments, the washed sand contains less than 3% by weight of organic matters.

Manure liquid and organic materials, rejected upwards by the cyclone 6, are transported to a rotary screen filter 23, also called a drum screen, where the thin materials are mechanically separated from the thick materials. The thick medium is sand-free manure liquid, which can be used for biogas, is transported to a tank 25 for manure liquid free of sand. The thin material is transported into the flush water tank 24 and is used for diluting the raw manure in the raw manure tank 1.

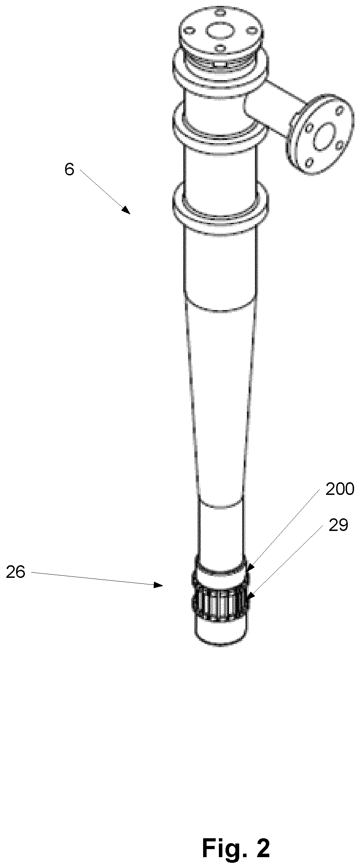

Fig. 2 shows the cyclone 6. The cyclone has an outlet portion 26 at a bottom part of the cyclone including the flow restriction portion 200. At the top of the cyclone, an inlet leads the raw stream of sand mixed with manure liquid containing organic material into the cyclone 6. In the cyclone 6, the sand material is pre-separated from the manure liquid or slurry by the function of the cyclone 6 and the difference in density between sand and liquid. The cyclone can control and sort the particles based on the particle size. The part of the liquid that is free of sand is forced out through an outlet at the top of the cyclone 6, while the rest with the heavier sand flows out through the outlet portion of the cyclone at a bottom part of the cyclone. The liquid that is free of sand being rejected upwards by the cyclone will be transported to a drum screen for mechanical separation. A clamping body 29 is engaging the outer periphery of the flow restriction portion 200.

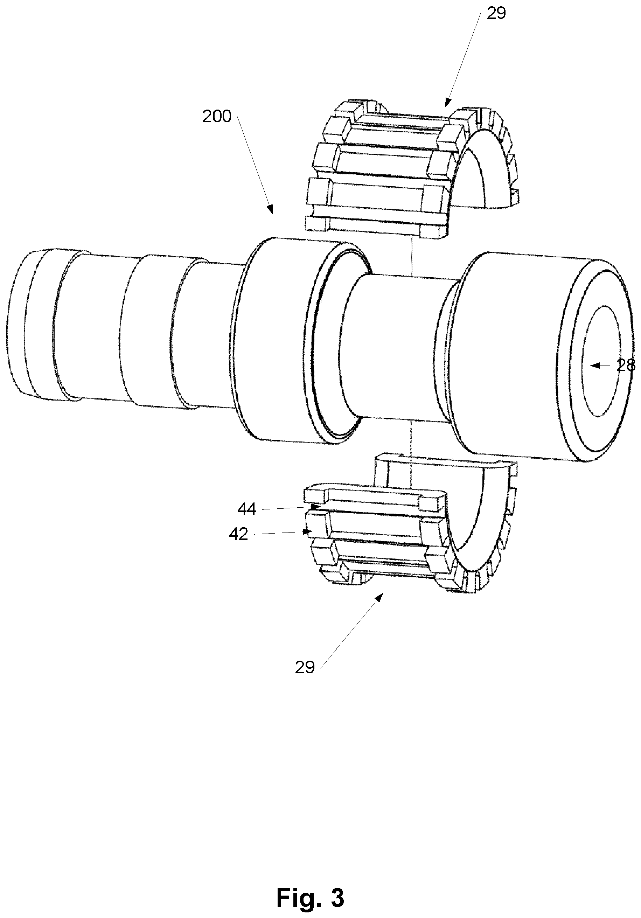

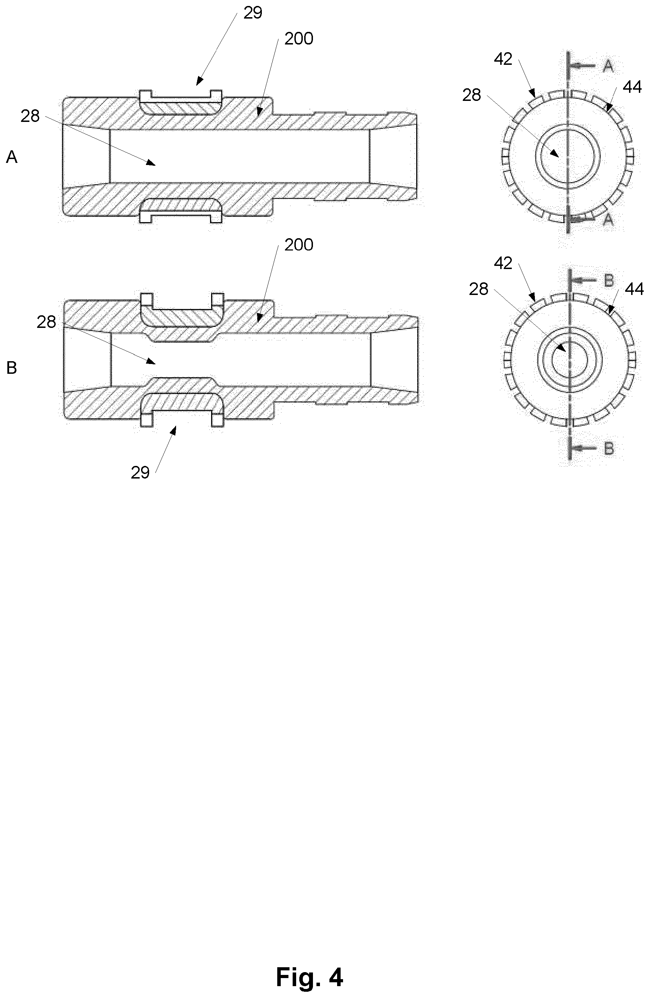

Figs. 3 and 4 shows the flow restriction portion 200 in greater details, where fig. 4A shows the flow restriction portion 200 in a non-compressed state, and where fig. 4B shows the flow restriction portion 200 in a compressed state.

The clamping body 29 is engaging the outer periphery of the flow restriction portion 200, the clamping body 29 being adjustable to vary the cross-section of the through-going passage 28 of the flow restriction portion. The clamping body 29 is enclosing the flow restriction portion 200 during operation. In the embodiment shown in these figures, the clamping body 29 is made of a polymeric material and comprises a plurality of first segments 42 interconnected by a plurality of thin walled second segments 44. When the clamping body is providing a pressure against the outer periphery of the flow restriction portion the thin walled segments is able to bulge.

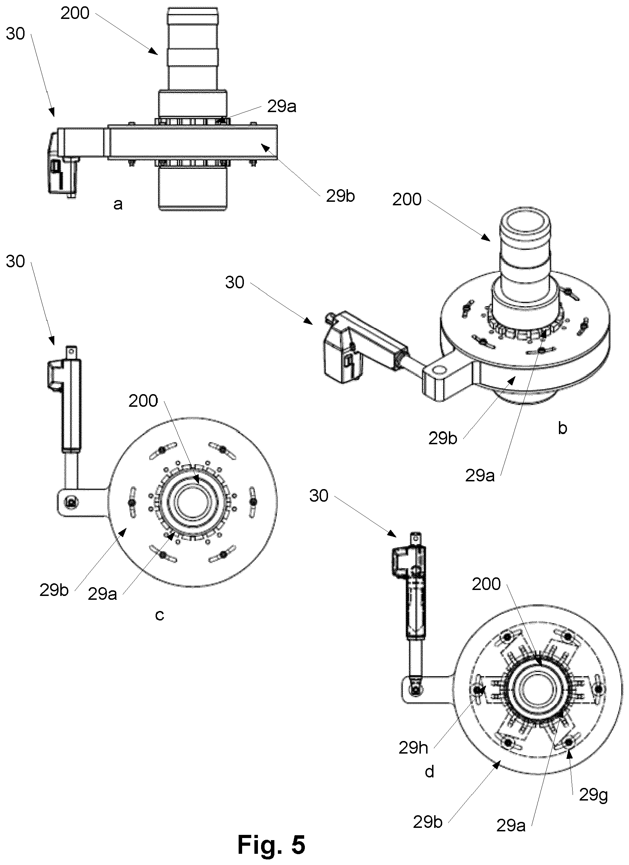

However, in one or more embodiments, the clamping body could also be a segmented clamping body. In one or more embodiments the clamping body could be a clamping body defined by a plurality of radially inwardly moving segment driven inwardly by the actuator which serves to rotate an outer disc engaging engaging-portions defined by faces on the segments (as detailed in figure 5). In another embodiment, the clamping body could be a structure operating in the manner of an iris valve (which does not close fully), such as by including a series of leaves or vanes which rotate in from the outer edge of a circular opening towards a center or in the form of an iris diaphragm, or a similar mechanism that can vary the diameter of the through-going passage of the flow restriction portion. The through-going passage 28 is having a circular cross-section, wherein the cross-section of the through-going passage is adjustable to assume a diameter in the range of 25 to 55 mm, such as in the range of 30 to 50 mm, such as in the range of 32 to 48 mm, such as in the range of 34 to 44 mm. The clamping body 29 may optionally be removable from the outlet portion 26 and replaceable.

Fig. 5 a, b, c and d shows the flow restriction portion 200, where in these figures two clamping bodies are engaging the outer periphery of the flow restriction portion 200 - clamping body 29a and 29b. Fig. 5a is a view from the side, fig. 5b is an isometric view, and fig. 5c is a top view, where fig. 5d is a cross section of the top view. In these figures, a clamping body 29a comprising a plurality of first segments 42 interconnected by a plurality of thin walled second segments 44 engage the outer periphery of the flow restriction portion 200. The clamping body 29a may be made of a polymeric material. Further, a clamping body 29b - defined by a plurality of radially inwardly moving segment 29h driven inwardly by the shown linear actuator 30 which serves to rotate an outer disc 29g engaging engaging-portions defined by slanted faces on the segments 29h such that the linear motion of the actuator 30 brings about the radial movement of the segments 29h so as to provide a radially inwardly directed clamping force against either the outer periphery of the aforementioned clamping body 29a, if present, or directly against the outer periphery surface of the flow restriction portion. Alternatively, the clamping body 29b could in another embodiment by a structure operating in the manner of an iris valve (which does not close fully), such as by including a series of leaves or vanes which rotate in from the outer edge of a circular opening towards a center or in the form of an iris diaphragm, or a similar mechanism that can vary the diameter of the through-going passage of the flow restriction portion. The clamping body may be made in a hard durable material. The segmented clamping body is especially good at maintaining an even circular geometry of the through-going passage during the adjustment of the clamping body 29b. The clamping body 29b is connected to an actuator 30. The adjustment of the clamping body 29b follows an adjustment command send by a control unit to the actuator 30, thereby adjusting the output flow of mixture into the tank.

In one or more embodiments, the clamping body 29a comprising a plurality of first segments 42 interconnected by a plurality of thin walled second segments 44 engaging the outer periphery of the flow restriction portion 200 could be left out, so that only the segmented clamping body 29b is engaging the outer periphery of the flow restriction portion 200.

The adjustment comment may be based on desired degree of separation of the raw stream of sand mixed with manure liquid of at least 95% by weight or more, or such as 97% by weight or more. The adjustment comment may be based on a measured value of the dry matter in said raw stream of sand mixed with manure liquid, flow as measured by a flow meter for registering a flow of material rejected upwards from the cyclone, flow as measured by a flow meter for registering a flow of the raw stream of sand mixed with manure liquid into the cyclone and/or pressure as measured by an apparatus for measuring pressure (a pressure transmitter) for registering a pressure of the raw stream of sand mixed with manure liquid inflow to the cyclone.

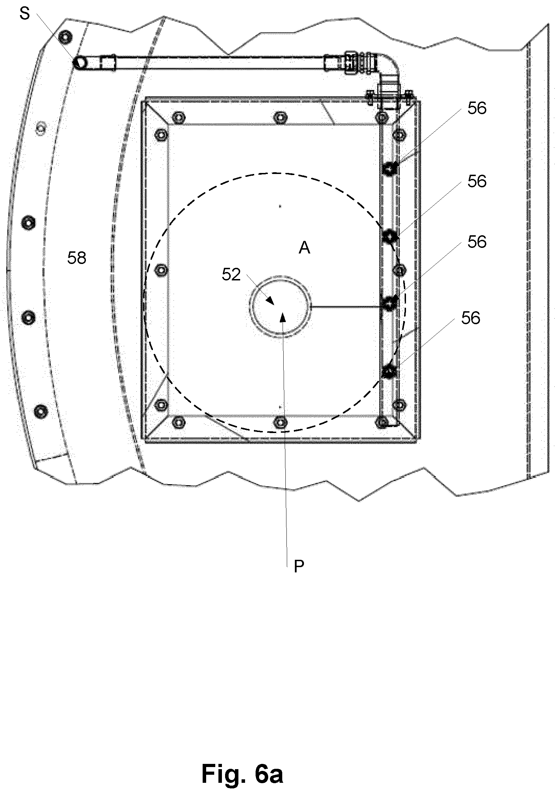

Figs. 6a-6c show details of a plant according to the invention, incorporating two differently configured mixture inlets 52. As shown, the tank 7 generally has in its top portion 50 a mixture inlet 52 for filling the mixture to be processed into the tank 7, and the aforementioned bottom portion 60 including the sand discharge 62.

The tank 7 also includes structure for defining a maximum level ML of filling of the mixture within the tank 7, such as in the way of a circular gutter 58 mounted to the inside periphery of the tank wall. The mixture inlet 52 is arranged at a general position P relative to the peripheral wall of the tank, at a height L above the maximum level ML of filling.

Moreover, the tank 7 of the plant further includes a number of fluid outlet(s) 56 that are connected to a source S, such as a fluid container or a fresh water supply, of a fluid, and that are also arranged at a level or height above the maximum level ML of filling. In operation, the fluid outlets 56 deliver a flow of the aforementioned fluid generally directed, by properly orienting the fluid outlets 56, towards pre-determined portions of the surface 300 of the mixture in the tank, which level normally corresponds to the maximum level ML, below the position P of the mixture inlet 52.

Where, as shown, the plant 100 includes a pre-separator cyclone 6 as discussed above, the mixture to be processed in the tank 7 flows into the tank 7 by gravity via the cyclone outlet portion 26 and the mixture inlet 52, the latter typically comprising an aperture formed in a shielded part of a cover of the tank 7, in which shielded part the cyclone outlet portion 26 connects to the mixture inlet 52.

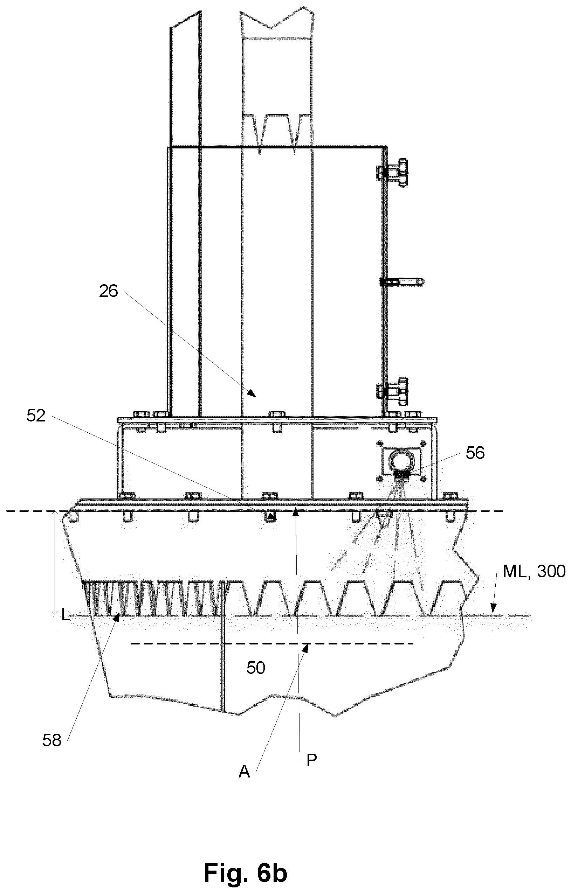

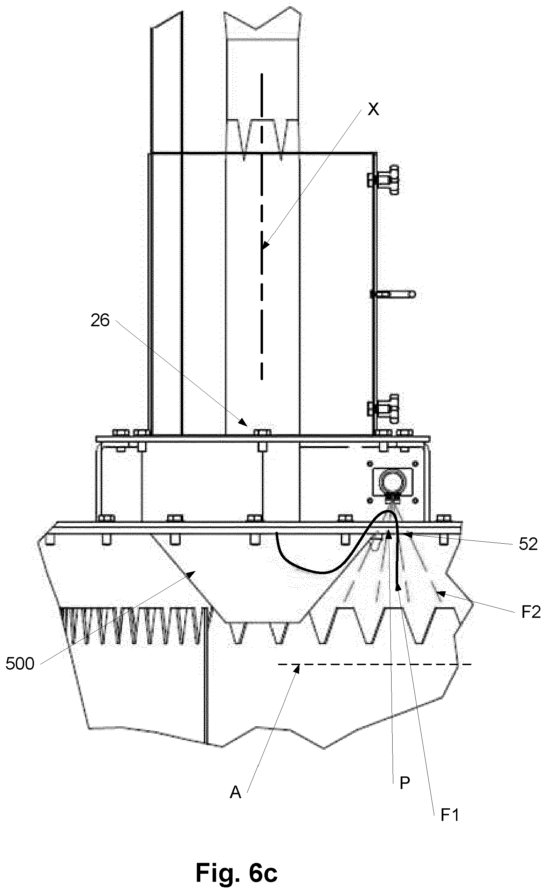

As shown in figs. 6b and 6c, the one or more fluid outlet(s) 56 are arranged adjacent the mixture inlet 52 such that fluid discharged from the fluid outlets 56 will strike the surface 300 where also mixture filled into the tank 7 via the mixture inlet hits the surface 300, i.e. in an area shown generally by letter A.

In one embodiment shown in fig. 6c the mixture inlet 56 comprises a bowl-shaped body 500 placed below the aforementioned aperture so as to directly receive the flow of incoming mixture, which flow is then discharged further through an annular passage extending around at least a portion of the bowl-shaped body 500, to flow around the annular outer periphery of the bowl-shaped body and then cascade annularly into the tank in a somewhat annular portion A of the surface 300, of which a portion is shown in fig. 6c. The bowl-shaped body 500 dampens the incoming flow of the mixture where desired.

Fig. 6b shows an alternative embodiment without any such flow dampening body 500 and, hence, where the incoming flow of the mixture is discharged directly onto a generally circular portion of the surface 300, as seen also in fig. 6a. The two embodiments have in common the aforementioned fluid outlet(s) 56 that are arranged such that fluid discharged from the fluid outlets 56 will strike that portion A of the surface 300 where also mixture filled into the tank 7 via the mixture inlet 52 hits the surface 300. This results in a breaking-up of the surface 300, i.e. to eliminate the tendency of the mixture to behave as if its surface were covered with a stretched elastic membrane reflecting what is often used to describe the effect of surface tension.

This "breaking-up" is of particular importance where fine sand is used by the farmer as bedding, which fine sand may be defined as a sand fraction where 90% by weight or more, such as 95% by weight or more of the sand has a grain size between 100 micron and 300 micron, since such fine sand may otherwise tend to remain on the surface 300 of the mixture in the tank, thus delaying the rate of settling of the sand within the bottom part of the tank 7.

While the aforementioned fluid may be a gas, such as compressed air, or a liquid containing a surfactant, it is preferred to use water, in particular fresh water typically available at farms, the fluid outlets 56 being configured to inject the fluid into said mixture.

In use, the plant is operated by filling into the tank 7 the mixture, where 90% by weight or more, such as 95% by weight or more of said sand has a grain size of between 100 micron and 300 micron and providing during the filling, or for a substantial time during the filling, a flow of the fluid into said tank 7, oriented towards a part of the surface 300 of the mixture in the tank 7 below the mixture inlet 52, and discharging continuously or intermittently said settled sand from said tank (7). The flow of the fluid into the mixture is preferably provided when the surface 300 of the mixture is at the maximum level ML.

### References

100 sand-manure liquid separation plant
1 tank for "raw manure"
2 dry matter meter
3 pump
4 pipe
5 macerator
6 cyclone
7 tank for processing a mixture of sand and manure liquid
9 flow meter
13 outlet of the tank
14 outlet for sludge
15 screw conveyor
16 water arrangement comprising water inlets
17 water valve
22 discharged sand
23 rotary screen filter
24 flush water tank
25 tank
200 flow restriction portion
26 outlet portion of the cyclone
28 through-going passage
29 clamping body
30 actuator
42 first segment(s)
44 thin walled second segment(s)
50 top portion
52 mixture inlet
56 fluid outlet(s)
58 overflow
40 stirrer
60 bottom portion
62 sand discharge
300 surface
500 bowl-shaped body

## Claims

1. A sand-manure liquid separation plant (100) comprising a tank (7) for processing a mixture of sand and manure liquid; said tank comprising:
- a top portion (50) including a mixture inlet (52) for introducing said mixture to be processed into said tank,
- a bottom portion (60) including a sand discharge (62),
wherein
- said plant (100) further comprises a pre-separator for a raw stream of sand mixed with manure liquid, said pre-separator including a cyclone (6), a tubular outlet portion (26) of said cyclone at a bottom part of the cyclone (6) being arranged at said top portion of said tank (7) for said mixture leaving said cyclone (6) to be processed in said tank (7) to flow into said tank (7) by gravity via said mixture inlet (52),
- said outlet portion (26) of said cyclone (6) including a flow restriction portion (200) being of a resilient material and having a through-going passage (28) for said mixture,
- said plant (100) including a control unit to control an output flow from said cyclone (6) of said mixture to be introduced into said tank (7) via said through-going passage (28),
- a first clamping body (29) engaging an outer periphery of said flow restriction portion (200), said first clamping body (29) being adjustable to vary the cross-section of said through-going passage (28) of said flow restriction portion (200), said first clamping body (29) optionally being removable from said outlet portion (26) and replaceable,
- wherein said adjustment of said first clamping body (29) follows an adjustment command send by the control unit to an actuator (30), thereby adjusting said output flow of said mixture into said tank (7),
- said through-going passage (28) having a circular cross-section, wherein the cross-section of said through-going passage (28) is adjustable by said first clamping body (29) to assume a diameter in the range of 25 to 55 mm, such as in the range of 30 to 50 mm, such as in the range of 32 to 48 mm, such as in the range of 34 to 44 mm, and
- wherein at least said flow restriction portion (200) of said outlet portion (26) is manufactured of a polyurethane material having a shore hardness value (shore A) in the range of 30 to 90, such as in the range of 50 to 80, such as in the range of 50 to 70, such as around 60.

2. The plant (100) according to claim 1, wherein the adjustment command is based on a measured value of the dry matter in said raw stream of sand mixed with manure liquid and/or wherein the adjustment command is based on flow as measured by a flow meter (9) for registering a second flow of material from the cyclone (6).

3. The plant (100) according to any of the preceding claims, further including a second clamping body (29) having an adjustable cross-section and engaging an outer periphery of said first clamping body (29).

4. The plant (100) according to any of the preceding claims, wherein said first clamping body and/or said second clamping body being configured to provide a uniform, or substantially uniform, radial pressure against said outer periphery of said flow restriction portion, wherein said first clamping body and/or said second clamping body being a substantially ring-shaped clamping body or a segmented clamping body.

5. A cyclone (6) comprising a tubular outlet portion (26), where said outlet portion (26) including a flow restriction portion (200) being of a resilient material having a through-going passage (28), a first clamping body (29) engaging an outer periphery of said flow restriction portion (200), said first clamping body (29) being adjustable to vary the cross-section of said through-going passage (28) of said flow restriction portion (200), said first clamping body (29) optionally being removable from said outlet portion (26) and replaceable,
wherein said adjustment of said first clamping body (29) follows an adjustment command send by a control unit to an actuator (30), thereby adjusting an output flow of a mixture into a tank (7),
wherein said through-going passage (28) having a circular cross-section, **characterised in that** the cross-section of said through-going passage (28) is adjustable by said first clamping body (29) to assume a diameter in the range of 25 to 55 mm, such as in the range of 30 to 50 mm, such as in the range of 32 to 48 mm, such as in the range of 34 to 44 mm, and
**in that** at least said flow restriction portion (200) of said outlet portion is manufactured of a polyurethane material having a shore hardness value (shore A) in the range of 30 to 90, such as in the range of 50 to 80, such as in the range of 50 to 70, such as around 60.

6. The cyclone according to claim 5, further including a second clamping body (29) having an adjustable cross-section and engaging an outer periphery of said first clamping body (29).

7. The cyclone according to any of the preceding claims 5 to 6, wherein said first clamping body (29) and/or said second clamping body (29) being configured to provide a uniform, or substantially uniform, radial pressure against said outer periphery of said flow restriction portion (200), wherein said first clamping body (29) and/or said second clamping body (29) being a substantially ring-shaped clamping body or a segmented clamping body.

8. Use of the cyclone (6) according to any of claims 5 to 7, in a sand-manure liquid separation plant (100), said plant comprising a tank (7) for processing a mixture of sand and manure liquid; said tank (7) comprising:
- a top portion (50) including a mixture inlet (52) for introducing said mixture into said tank (7),
- a bottom portion (60) including a sand discharge (62),
wherein said plant (100) further comprises a pre-separator for a raw stream of sand mixed with manure liquid, said cyclone (6) defining said pre-separator, a tubular outlet portion (26) of said cyclone (6) at a bottom part of the cyclone (6) being arranged at said top portion of said tank (7) for said mixture leaving said cyclone (6) to be processed in said tank (7) to flow into said tank (7) by gravity via said mixture inlet.

9. Use of the plant according to any of claims 1-4, where 90% by weight or more, such as 95% by weight or more, of the sand has a grain size of between 90 microns to 350 microns, such as 100 micron to 300 microns.

10. A method of operating the plant (100) according to any of claims 1 to 4, comprising the steps of:
- measuring:
∘ a value of the dry matter of the raw stream of sand mixed with manure liquid, and/or
∘ flow as measured by a flow meter for registering a second flow of material from the cyclone (6), and/or
∘ flow as measured by a flow meter of the raw stream of sand mixed with manure liquid into the cyclone (6);
- sending an adjustment command from the control unit to the actuator based on said measurements;
- said actuator adjusting the first clamping body (29) to vary the cross-section of said through-going passage (28) of said flow restriction portion (200) thereby adjusting said output flow of said mixture into said tank (7).

## Patentansprüche

1. Sand-Jauche-Trennungsanlage (100), umfassend einen Tank (7) zum Verarbeiten eines Gemischs aus Sand und Jauche; wobei der Tank Folgendes umfasst:
- einen oberen Abschnitt (50), der einen Gemischeinlass (52) zum Eingeben des zu verarbeitenden Gemischs in den Tank beinhaltet,
- einen unteren Abschnitt (60), der einen Sandaustrag (62) beinhaltet, wobei
- die Anlage (100) ferner einen Vorabscheider für einen rohen Sandstrahl gemischt mit Jauche umfasst, wobei der Vorabscheider einen Zyklon (6) beinhaltet, wobei ein rohrförmiger Auslassabschnitt (26) des Zyklons an einem unteren Teil des Zyklons (6) an dem oberen Abschnitt des Tanks (7) für das Gemisch angeordnet ist, das den Zyklon (6) verlässt, um in dem Tank (7) verarbeitet zu werden, um per Schwerkraft über den Gemischeinlass (52) in den Tank (7) zu strömen,
- der Auslassabschnitt (26) des Zyklons (6) einen Durchflussbegrenzungsabschnitt (200) eines elastischen Materials beinhaltet und einen Durchgangskanal (28) für das Gemisch aufweist,
- die Anlage (100) eine Steuereinheit beinhaltet, um einen Ausgangsdurchfluss aus dem Zyklon (6) des Gemischs zu steuern, das über den Durchgangskanal (28) in den Tank (7) einzugeben ist,
- einen ersten Klemmkörper (29), der einen Außenumfang des Durchflussbegrenzungsabschnitts (200) in Eingriff nimmt, wobei der erste Klemmkörper (29) einstellbar ist, um den Querschnitt des Durchgangskanals (28) des Durchflussbegrenzungsabschnitts (200) zu variieren, wobei der erste Klemmkörper (29) optional aus dem Auslassabschnitt (26) lösbar und austauschbar ist,
- wobei die Einstellung des ersten Klemmkörpers (29) einem Einstellbefehl folgt, der durch die Steuereinheit an den Aktuator (30) gesendet wird, wodurch der Ausgangsdurchfluss des Gemischs in den Tank (7) eingestellt wird,
- der Durchgangskanal (28) einen kreisförmigen Querschnitt aufweist, wobei der Querschnitt des Durchgangskanals (28) durch den ersten Klemmkörper (29) einstellbar ist, um einen Durchmesser in dem Bereich von 25 bis 55 mm, wie etwa in dem Bereich von 30 bis 50 mm, wie etwa in dem Bereich von 32 bis 48 mm, wie etwa in dem Bereich von 34 bis 44 mm, anzunehmen, und
- wobei mindestens der Durchflussbegrenzungsabschnitt (200) des Auslassabschnitts (26) aus einem Polyurethan-Material hergestellt ist, das einen Shore-Härtewert (Shore A) in dem Bereich von 30 bis 90, wie etwa in dem Bereich von 50 bis 80, wie etwa in dem Bereich von 50 bis 70, wie etwa um 60, aufweist.

2. Anlage (100) nach Anspruch 1, wobei der Einstellbefehl auf einem gemessenen Wert der Trockenmasse in dem rohen Sandstrahl gemischt mit Jauche basiert und/oder wobei der Einstellbefehl auf einem Durchfluss, wie durch einen Durchflussmesser (9) gemessen, zum Registrieren eines zweiten Materialdurchflusses aus dem Zyklon (6) basiert.

3. Anlage (100) nach einem der vorhergehenden Ansprüche, ferner beinhaltend einen zweiten Klemmkörper (29), der einen einstellbaren Querschritt aufweist und einen Außenumfang des ersten Klemmkörpers (29) in Eingriff nimmt.

4. Anlage (100) nach einem der vorhergehenden Ansprüche, wobei der erste Klemmkörper und/oder der zweite Klemmkörper dazu konfiguriert sind, einen gleichmäßigen, oder im Wesentlichen gleichmäßigen, Radialdruck gegen den Außenumfang des Durchflussbegrenzungsabschnitts bereitzustellen, wobei der erste Klemmkörper und/oder der zweite Klemmkörper ein im Wesentlichen ringförmiger Klemmkörper oder ein segmentierter Klemmkörper sind.

5. Zyklon (6), umfassend einen ringförmigen Auslassabschnitt (26), wobei der Auslassabschnitt (26) einen Durchflussbegrenzungsabschnitt (200) beinhaltet, der aus einem elastischen Material besteht, das einen Durchgangskanal (28) aufweist, wobei ein erster Klemmkörper (29) einen Außenumfang des Durchflussbegrenzungsabschnitts (200) in Eingriff nimmt, wobei der erste Klemmkörper (29) einstellbar ist, um den Querschnitt des Durchgangskanals (28) des Durchflussbegrenzungsabschnitts (200) zu variieren, wobei der erste Klemmkörper (29) optional aus dem Auslassabschnitt (26) lösbar und austauschbar ist,
wobei die Einstellung des ersten Klemmkörpers (29) einem Einstellbefehl folgt, der durch eine Steuereinheit an einen Aktuator (30) gesendet wird, wodurch ein Ausgangsdurchfluss eines Gemischs in den Tank (7) eingestellt wird,
wobei der Durchgangskanal (28) einen kreisförmigen Querschnitt aufweist, **dadurch gekennzeichnet, dass** der Querschnitt des Durchgangskanals (28) durch den ersten Klemmkörper (29) einstellbar ist, um einen Durchmesser in dem Bereich von 25 bis 55 mm, wie etwa in dem Bereich von 30 bis 50 mm, wie etwa in dem Bereich von 32 bis 48 mm, wie etwa in dem Bereich von 34 bis 44 mm, anzunehmen, und
dass mindestens der Durchflussbegrenzungsabschnitt (200) des Auslassabschnitts aus einem Polyurethan-Material hergestellt ist, das einen Shore-Härtewert (Shore A) in dem Bereich von 30 bis 90, wie etwa in dem Bereich von 50 bis 80, wie etwa in dem Bereich von 50 bis 70, wie etwa um 60, aufweist.

6. Zyklon nach Anspruch 5, ferner beinhaltend einen zweiten Klemmkörper (29), der einen einstellbaren Querschritt aufweist und einen Außenumfang des ersten Klemmkörpers (29) in Eingriff nimmt.

7. Zyklon nach einem der vorhergehenden Ansprüche 5 bis 6, wobei der erste Klemmkörper (29) und/oder der zweite Klemmkörper (29) dazu konfiguriert sind, einen gleichmäßigen, oder im Wesentlichen gleichmäßigen, Radialdruck gegen den Außenumfang des Durchflussbegrenzungsabschnitts (200) bereitzustellen, wobei der erste Klemmkörper (29) und/oder der zweite Klemmkörper (29) ein im Wesentlichen ringförmiger Klemmkörper oder ein segmentierter Klemmkörper sind.

8. Verwendung des Zyklons (6) nach einem der Ansprüche 5 bis 7 in einer Sand-Jauche-Trennungsanlage (100), wobei die Anlage einen Tank (7) zum Verarbeiten eines Gemischs aus Sand und Jauche umfasst; wobei der Tank (7) Folgendes umfasst:
- einen oberen Abschnitt (50), der einen Gemischeinlass (52) zum Eingeben des Gemischs in den Tank (7) beinhaltet,
- einen unteren Abschnitt (60), der einen Sandaustrag (62) beinhaltet,
wobei die Anlage (100) ferner einen Vorabscheider für einen rohen Sandstrahl gemischt mit Jauche umfasst, wobei der Zyklon (6) den Vorabscheider definiert, wobei ein rohrförmiger Auslassabschnitt (26) des Zyklons (6) an einem unteren Teil des Zyklons (6) an dem oberen Abschnitt des Tanks (7) für das Gemisch angeordnet ist, das den Zyklon (6) verlässt, um in dem Tank (7) verarbeitet zu werden, um per Schwerkraft über den Gemischeinlass in den Tank (7) zu strömen.

9. Verwendung der Anlage nach einem der Ansprüche 1-4, wobei 90 Gew.-% oder mehr, wie etwa 95 Gew.-% oder mehr, des Sands eine Korngröße von zwischen 90 Mikron bis 350 Mikron, wie etwa 100 Mikron bis 300 Mikron, aufweist.

10. Verfahren zum Betreiben der Anlage (100) nach einem der Ansprüche 1 bis 4, umfassend die folgenden Schritte:
- Messen:
∘ eines Werts der Trockenmasse des rohen Sandstrahls gemischt mit Jauche, und/oder
∘ Durchfluss, wie durch einen Durchflussmesser gemessen, zum Registrieren eines zweiten Materialdurchflusses aus dem Zyklon (6), und/oder
∘ Durchfluss, wie durch einen Durchflussmesser gemessen, des rohen Sandstrahls gemischt mit Jauche in den Zyklon (6);
- Senden eines Einstellbefehls aus der Steuereinheit in den Aktuator basierend auf den Messungen;
- wobei der Aktuator den ersten Klemmkörper (29) einstellt, um den Querschnitt des Durchgangskanals (28) des Durchflussbegrenzungsabschnitts (200) zu variieren, wodurch der Ausgangsdurchfluss des Gemischs in den Tank (7) eingestellt wird.

## Revendications

1. Installation de séparation de sable-purin (100) comprenant une cuve (7) pour le traitement d'un mélange de sable et de purin ; ladite cuve comprenant :
- une partie supérieure (50) incluant une entrée de mélange (52) pour introduire ledit mélange à traiter dans ladite cuve,
- une partie inférieure (60) i
ncluant une décharge de sable (62), dans laquelle
- ladite installation (100) comprend en outre un pré-séparateur pour un flux brut de sable mélangé avec du purin, ledit pré-séparateur incluant un cyclone (6), une partie de sortie tubulaire (26) dudit cyclone au niveau d'une partie inférieure du cyclone (6) étant agencée au niveau de ladite partie supérieure de ladite cuve (7) pour que ledit mélange quittant ledit cyclone (6) pour être traité dans ladite cuve (7) s'écoule dans ladite cuve (7) par gravité par l'intermédiaire de ladite entrée de mélange (52),
- ladite partie de sortie (26) dudit cyclone (6) incluant une partie de restriction d'écoulement (200) étant en un matériau élastique et ayant un passage traversant (28) pour ledit mélange,
- ladite installation (100) incluant une unité de commande pour commander un écoulement de sortie provenant dudit cyclone (6) dudit mélange à introduire dans ladite cuve (7) par l'intermédiaire dudit passage traversant (28),
- un premier corps de serrage (29) venant en prise avec une périphérie externe de ladite partie de restriction d'écoulement (200), ledit premier corps de serrage (29) étant ajustable pour faire varier la section transversale dudit passage traversant (28) de ladite partie de restriction d'écoulement (200), ledit premier corps de serrage (29) étant éventuellement amovible de ladite partie de sortie (26) et remplaçable,
- dans laquelle ledit ajustement dudit premier corps de serrage (29) suit une commande d'ajustement envoyer par l'unité de commande à un actionneur (30), ajustant ainsi ledit écoulement de sortie dudit mélange dans ladite cuve (7),
- ledit passage traversant (28) ayant une section transversale circulaire, dans laquelle la section transversale dudit passage traversant (28) est ajustable par ledit premier corps de serrage (29) pour prendre un diamètre dans la plage de 25 à 55 mm, tel que dans la plage de 30 à 50 mm, tel que dans la plage de 32 à 48 mm, tel que dans la plage de 34 à 44 mm, et
- dans laquelle au moins ladite partie de restriction d'écoulement (200) de ladite partie de sortie (26) est fabriquée en un matériau polyuréthane ayant une valeur de dureté shore (shore A) dans la plage de 30 à 90, telle que dans la plage de 50 à 80, telle que dans la plage de 50 à 70, telle qu'autour de 60.

2. Installation (100) selon la revendication 1, dans laquelle la commande d'ajustement est basée sur une valeur mesurée de la matière sèche dans ledit flux brut de sable mélangé avec du purin et/ou dans laquelle la commande d'ajustement est basée sur un écoulement tel que mesuré par un débitmètre (9) pour enregistrer un second écoulement de matériau provenant du cyclone (6).

3. Installation (100) selon l'une quelconque des revendications précédentes, incluant en outre un second corps de serrage (29) ayant une section transversale ajustable et venant en prise avec une périphérie externe dudit premier corps de serrage (29).

4. Installation (100) selon l'une quelconque des revendications précédentes, dans laquelle ledit premier corps de serrage et/ou ledit second corps de serrage étant configuré pour fournir une pression radiale uniforme, ou sensiblement uniforme, contre ladite périphérie externe de ladite partie de restriction d'écoulement, dans laquelle ledit premier corps de serrage et/ou ledit second corps de serrage étant un corps de serrage sensiblement en forme d'anneau ou un corps de serrage segmenté.

5. Cyclone (6) comprenant une partie de sortie tubulaire (26), où ladite partie de sortie (26) incluant une partie de restriction d'écoulement (200) étant en un matériau élastique ayant un passage traversant (28), un premier corps de serrage (29) venant en prise avec une périphérie externe de ladite partie de restriction d'écoulement (200), ledit premier corps de serrage (29) étant ajustable pour faire varier la section transversale dudit passage traversant (28) de ladite partie de restriction d'écoulement (200), ledit premier corps de serrage (29) étant éventuellement amovible de ladite partie de sortie (26) et remplaçable,
dans lequel ledit ajustement dudit premier corps de serrage (29) suit une commande d'ajustement envoyer par une unité de commande à un actionneur (30), ajustant ainsi un écoulement de sortie d'un mélange dans une cuve (7),
dans lequel ledit passage traversant (28) ayant une section transversale circulaire, **caractérisé en ce que** la section transversale dudit passage traversant (28) est ajustable par ledit premier corps de serrage (29) pour prendre un diamètre dans la plage de 25 à 55 mm, tel que dans la plage de 30 à 50 mm, tel que dans la plage de 32 à 48 mm, tel que dans la plage de 34 à 44 mm, et
**en ce qu'**au moins ladite partie de restriction d'écoulement (200) de ladite partie de sortie est fabriquée en un matériau polyuréthane ayant une valeur de dureté shore (shore A) dans la plage de 30 à 90, telle que dans la plage de 50 à 80, telle que dans la plage de 50 à 70, telle qu'autour de 60.

6. Cyclone selon la revendication 5, incluant en outre un second corps de serrage (29) ayant une section transversale ajustable et venant en prise avec une périphérie externe dudit premier corps de serrage (29).

7. Cyclone selon l'une quelconque des revendications précédentes 5 à 6, dans lequel ledit premier corps de serrage (29) et/ou ledit second corps de serrage (29) étant configurés pour fournir une pression radiale uniforme, ou sensiblement uniforme, contre ladite périphérie externe de ladite partie de restriction d'écoulement (200), dans lequel ledit premier corps de serrage (29) et/ou ledit second corps de serrage (29) étant un corps de serrage sensiblement en forme d'anneau ou un corps de serrage segmenté.

8. Utilisation du cyclone (6) selon l'une quelconque des revendications 5 à 7, dans une installation de séparation de sable-purin (100), ladite installation comprenant une cuve (7) pour le traitement d'un mélange de sable et de purin ; ladite cuve (7) comprenant :
- une partie supérieure (50) incluant une entrée de mélange (52) pour introduire ledit mélange dans ladite cuve (7),
- une partie inférieure (60) incluant une décharge de sable (62),
dans laquelle ladite installation (100) comprend en outre un pré-séparateur pour un flux brut de sable mélangé avec du purin, ledit cyclone (6) définissant ledit pré-séparateur, une partie de sortie tubulaire (26) dudit cyclone (6) au niveau d'une partie inférieure du cyclone (6) étant agencée au niveau de ladite partie supérieure de ladite cuve (7) pour que ledit mélange quittant ledit cyclone (6) pour être traité dans ladite cuve (7) s'écoule dans ladite cuve (7) par gravité par l'intermédiaire de ladite entrée de mélange.

9. Utilisation de l'installation selon l'une quelconque des revendications 1 à 4, où 90 % en poids ou plus, tel que 95 % en poids ou plus, du sable a une taille de grain d'entre 90 microns à 350 microns, tel que 100 micron à 300 microns.

10. Procédé de fonctionnement de l'installation (100) selon l'une quelconque des revendications 1 à 4, comprenant :
- la mesure de :
∘ une valeur de la matière sèche du flux brut de sable mélangé avec du purin, et/ou
∘ un écoulement tel que mesuré par un débitmètre pour enregistrer un second écoulement de matériau provenant du cyclone (6), et/ou
∘ un écoulement tel que mesuré par un débitmètre du flux brut de sable mélangé avec du purin dans le cyclone (6) ;
- l'envoi d'une commande d'ajustement provenant de l'unité de commande à l'actionneur sur la base desdites mesures ;
- l'ajustement par ledit actionneur du premier corps de serrage (29) pour faire varier la section transversale dudit passage traversant (28) de ladite partie de restriction d'écoulement (200) ajustant ainsi ledit écoulement de sortie dudit mélange dans ladite cuve (7).
